# EUROPEAN PATENT SPECIFICATION

(11) **EP 2 988 542 B1**
(45) Date of publication and mention of the grant of the patent: **02.06.2021**
(21) Application number: 14306285.9
(22) Date of filing: 18.08.2014
(51) Int. Cl.: H04W 24/02, H04B 7/02, H04W 16/32, H04W 48/16, H04L 5/00, H04W 74/00, H04W 36/30, H04W 8/26

(54) **Cell Identification**
Zellidentifikation
Identification de cellule

(43) Date of publication of application: 24.02.2016
(73) Proprietor: Alcatel Lucent, 91620 Nozay (FR)
(72) Inventor: LOPEZ-PEREZ, David, Dublin, 15 (IE); KUCERA, Stepan, Dublin, 15 (IE); CLAUSSEN, Holger, Dublin, 15 (IE)
(74) Representative: Coghlan, Judith Elizabeth Kensy

(56) References cited:
- EP-A1- 1 986 348
- EP-A1- 2 725 845
- WO-A1-2011/100676
- US-A1- 2013 028 180
- US-A1- 2014 126 497
- SAMSUNG: "Indication and Determination of CSI-RS Configuration", 3GPP DRAFT; R1-104597 CSI-RS CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449892, [retrieved on 2010-08-17]

## Description

### FIELD OF THE INVENTION

Aspects provide: a method of allocating a restricted number of cell identifiers to a plurality of cells operating in a wireless communications network, a network control node and computer program product operable to perform that method.

### BACKGROUND

Wireless telecommunications systems are known. In such systems, mobile communication devices (for example, mobile telephones) are operable to communicate with base stations provided by network providers.

In known wireless telecommunications systems, radio coverage is provided to network connectible devices such as mobile telephones, or wireless devices such as iPads or other similar tablets, within areas known as cells. A base station is typically located in each cell to provide radio coverage. Network connectible devices in each cell are typically operable to receive information and data from a base station and to transmit information and data to a base station.

User equipment roam through a wireless communication system. Base stations are provided which support those areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within a geographical area of service. Typically, a different antenna within a base station supports each associated sector. Each base station has multiple antennas.

Traditional base stations provide coverage in relatively large geographical areas and those cells are often referred to as "macro" cells. It is possible to provide a heterogeneous network (HetNet) where smaller sized cells are provided within macro cells. Such smaller sized cells are sometimes referred to as micro cells, metro cells, pico cells or femto cells. One way to establish a small cell is to provide a small cell base station, also known as a low power node, which provides coverage having a relatively limited range within the coverage area of a macro cell.

The transmission power of a small cell base station is relatively low and, as a result, each small cell provides a small coverage area in comparison to that provided by a macro cell and may be used, for example, to provide coverage in a network hot spot or an office or a home.

Small cells are typically provided where communications coverage provided by a macro cell is poor, or where a user wishes to use an alternative communications link provided locally by a small cell base station to communicate with a core network. Small cells can also be provided to increase capacity within a network.

Although the deployment of small cell base stations can provide advantages, unexpected consequences can occur.

Accordingly, it is desired to provide an improved network suited to the inclusion of small cell base stations.

WO2011/100676 discloses a method of allocating a restricted number of cell identifiers CSI-RS to a plurality of cells operating in a wireless communications network, the cells comprising both macro and small cells. Where the number of cells is large, the CSI-RS resource allocation is divided into two layers and the small cells are allocated to a first tier and the macro cells to a second tier. The common CSI-RS group maybe assigned to cells of both the first and second tiers, provided that any first tier group (small cells) having the same CSI-RS allocation may not be overlap with any second tier group (macro cells) having the same CSI-RS resource allocation.

EP2986348 discloses cell identifiers for macro and small cells, where the macro cells have an identifier from a first set and the small cells have identifiers from a second set, each set being unique to that type of cell, such that the user equipment can determine the hierarchical structure of the cells.

EP 2725845 discloses a terminal which is capable of selecting appropriate transmission points while reducing the overhead for channel state information (CSI) reporting is provided. A measuring unit uses a plurality of reference signals from a plurality of transmission points to measure a first reception quality with respect to each of the plurality of reference signals. A receiving unit receives a first piece of information concerning at least one specific reference signal among the plurality of reference signals, and the measuring unit uses the specific reference signal to measure a second reception quality on the basis of the first piece of information. A transmitting unit reports the first reception quality, which satisfies a predetermined condition, and the second reception quality.

US 2013/028180 discloses a method and system for access and uplink power control for a wireless system having multiple transmit points. In one aspect a method operates in a wireless network having a plurality of transmission points (TP) including a macro evolved Node B (eNB) and at least one low power node (LPN) having transmit power lower than that of the macro eNB, the method detecting, by the user equipment, a transmission point having a lowest path loss to the user equipment; and transmitting, by the user equipment, a physical random access channel (PRACH) preamble on a PRACH directed to the transmission points having the lowest path losses.

US 2014/126497 discloses techniques for decoupling uplink and downlink operations. According to certain aspects, a wireless node (e.g., a low power node) may receive, from a base station of a first cell, signaling indicating a random access channel (RACH) configuration for a wireless device. The wireless node may then detect the wireless node performing a RACH detection (based on the RACH configuration) and report the RACH detection and desired UL configuration to the base station of the first cell. The base station of the first cell may then select the wireless node for serving the wireless device for UL operations (e.g., based on the reported RACH detection-and similar reports from other wireless nodes detecting the same RACH procedure).

### SUMMARY

The invention is defined in the appended claims.

A first aspect provides a method in accordance with claim 1 and recognises that small cells deployed within a macro cell layer may be used to improve capacity of a system. Provision of small cells within a network can result in both gains and losses. Gains may be achieved by offloading traffic from a macro cell to deployed small cells and it can be shown that significant capacity improvement can be achieved by means of a HetNet deployment when compared to that of a homogeneous (macro cell only) network deployment. However, there are also losses or difficulties associated with HetNet network deployments.

One such issue is that the deployment of multiple small cells within a macro cell layer can make dealing with mobility of user equipment a challenge. In particular, the provision of multiple small cells can result in very frequent handover to small cells. Existing techniques designed for operation in a homogeneous network deployment may be unsuited to a network deployment including multiple small cells.

It will be understood that operational parameters which maybe appropriate to a homogeneous (macro only) deployment may be less appropriate in relation to a HetNet deployment. In particular, frequent handovers and reselection between small cells can lead to a high amount of RRC signalling. For example, in the case where two small cells are provided within the coverage area of a macro cell and user equipment moves across a coverage region supported by the small cells 1 and 2, the usefulness of handover or reselection may depend upon the nature of the movement of a user equipment across those coverage regions. In particular, for user equipment moving at high speed, setting handover or reselection criteria in accordance with that which might be implemented for a solely macro deployment is likely to be such that a handover or reselection event is triggered, but that such an implementation causes a high level of RRC signalling but offers very little benefit in terms of traffic offloading since the time spent by user equipment in each small cell coverage region would be relatively small. It will be appreciated that it could be beneficial if the user equipment could identify cells as being small cells and therefore use appropriate operational parameters in relation to small cells (for example, implementation of a different measurement report), such that it can avoid reselecting to a small cell when the user equipment is moving across their coverage region at high speed.

Accordingly, the first aspect recognises that appropriate operation of user equipment within a network may be dependent upon the type of base station from which user equipment may receive service and, for example, the nature of the operation of user equipment within a network. In other words, operational parameters of relevance to handover or reselection may be useful to user equipment when deciding how to handle movement between cells.

It will be appreciated that various heterogeneous network deployment scenarios are possible. In particular, common deployment scenarios include a first scenario in which macro and small cells operate on the same carrier frequency (intra-frequency) and those macro and small cells are connected via a non-ideal backhaul. A typical alternative scenario is one in which macro and small cells are provided, operating using different carrier frequencies (inter-frequency), those cells also being connected via a non-ideal backhaul link.

In both such typical deployment scenarios, various challenges are faced including: mobility robustness; uplink downlink imbalance between macro and small cells; an increase in signalling load (for example, signalling to a core network due to frequent handover); difficulties in relation to improvements of per user throughput as a result of utilisation of radio resource in more than one base station, and an increase in network planning and configuration effort.

Amongst those challenges, mobility robustness is of particular importance. It has been recognised that a heterogeneous network deployment may, if operational parameters are not set appropriately, result in increased handover failure or radio link failure when users move from small cells to large cells and vice versa.

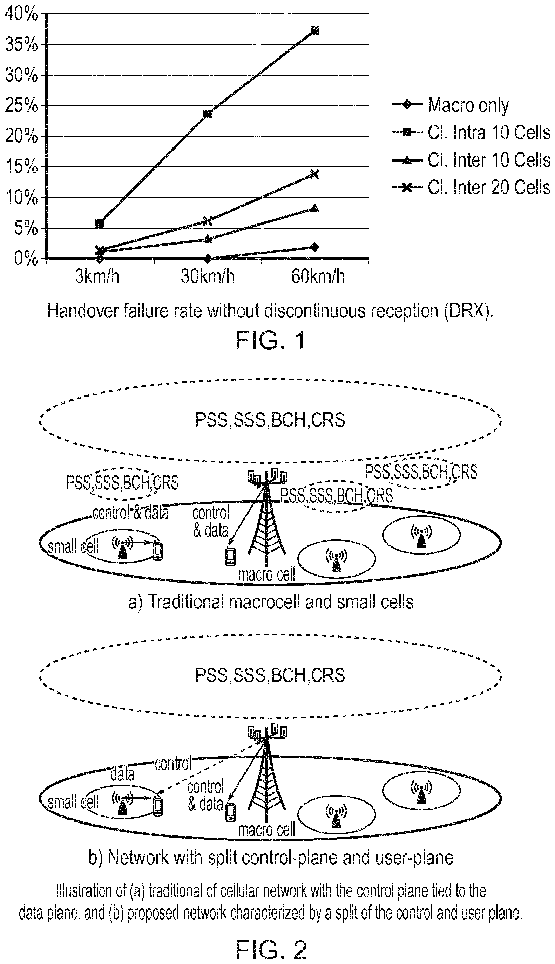

As shown in Figure 1, which illustrates schematically handover failure rate in network deployments without discontinuous reception, the handover rate in a deployment scenario where macro and small cells operate using the same carrier frequency is higher than handover failure rates in a deployment scenario where macro and small cells are provided to operate on different carrier frequencies. That higher handover failure rate is due to higher interference between macro and small cells. It is also clear from Figure 1 that the handover failure rate in a deployment scenario in which macro and small cells are provided on different carrier frequencies is higher than that in a macro cell only network. That handover failure rate increase is due to interference in small cell carriers.

The first aspect recognises that within some network deployments it may not be possible to identify a cell on the basis of explicit control plane features; for example, acquisition signals, system information and/or cell reference signals. As a result, other implicit means of cell identification can be deployed in order to implement appropriate cell identification procedures to support any efficient user plane transmission mechanism.

The first aspect recognises that cell identification issues arise, including cell confusion and cell collision: An identifier collision occurs if at least two neighbouring cells use the same identifier as an indication of their identity. An identifier collision leads to an incorrect cell identification and poor channel estimation by user equipment in the vicinity of those colliding cells. Identifier confusion occurs when, for example, a macro cell is not able to distinguish amongst multiple cells using the same identifier. Consequently, macro cell control mechanisms, such as RRC management, may be performed incorrectly and cause a disruption to data service of user equipment.

The first aspect recognises that smart allocation of identifiers within a network can mitigate cell confusion issues. Aspects may help to solve or mitigate the confusion problem. Aspects relate to a network-based method to efficiently avoid or mitigate likelihood of encountering a confusion problem whilst using a limited number of identifiers. The benefits of such an approach may include compliance with existing network standards.

Aspects operate to assign identifiers to small cells in a heterogeneous network in a hierarchical manner. That hierarchical manner is implemented having regard to different small cell base stations and network features (for example, output power, cell size, inter-cell distance and similar) and may be deployed such that nodes within a network can then use fingerprint methods to ensure that cell confusion resolution can occur. Aspects operate to be compatible with existing standards and to work with legacy user equipment handsets.

Aspects may incorporate a means to assign identifiers to small cells in such a way that the performance of fingerprinting approaches when resolving potential identifier confusion can be improved. Fingerprinting methods may be such that they are able to operate even when a low number of identifiers are used within a network deployment.

Arrangements may operate such that assignment of a limited number of identifiers is performed such that those identifiers are re-used as much as possible whilst ensuring that there is always at least one confusion-free identifier within a geographical area or cluster of small cells. Such a confusion-free allocation of a limited number of identifiers may provide a reference point for fingerprint methods in relation to resolving confusion. In order to implement such an assignment of identifiers a method based on the concept of network tiering is chosen.

Arrangements may be such that the hierarchical grouping is performed based upon an indication of size of a region of radio coverage supported by each cell-type. A heterogeneous network usually comprises a number of different network tiers characterised by different base stations and network features, including, for example, cost, size, power, range, inter-site distance and load of base stations. In some embodiments, layering of the network into a hierarchical structure comprises creating a "tree structure" or network heirarchy according to cell types. The hierarchical tree may take into account overlap between coverage regions of cells at different layers of the hierarchy. A macrocell may support a coverage region which encompasses all coverage regions supported by other (small) cells in the wireless network to which identifiers are being allocated or assigned. As a result, the macrocell is at the top of the hierarchy.

Arrangements may be such that the allocation of the cell identifiers is performed sequentially, starting with cells determined to be at the highest layer of the determined hierarchical grouping. Accordingly, cell confusion maybe resolved at higher layers within the network, even if, in some instances, confusion between those cells at the very lowest layer of the hierarchy may not be easily resolved.

Arrangements may be such that the method comprises: determining the restricted number of cell identifiers is insufficient to meet said allocation criteria; and identifying a cell in a lower layer of the hierarchical grouping to be promoted to a higher layer to meet the allocation criteria. For example, in a cluster of small cells of a low network tier there may not be a small cell covering that network tier in a higher network tier. For example, there may exist within a network a cluster of five pico cells where there is no metro cell. One of the small cells of the pico cell cluster may be promoted to "cluster head" and take an identifier from the subset of identifiers belonging to an immediately higher network tier. In this way, the unique identity required to re-use the subset of identifier belonging to a lower network tier in a different location using fingerprint methods is provided. To ensure sufficient visibility for the pilot signal of the cluster head, some implementations may be such that its pilot transmission power maybe increased in combination, for example, with an appropriate handover threshold such that the signal can be received in a large enough area but that its effective coverage area does not change. Accordingly, in one example, the method comprises: instructing the identified cell to make transmissions at an increased transmit power.

Arrangements may be such that the method comprises: adapting the allocation of cell identifiers on the basis of a report from at least two of the plurality of cells indicative of receipt of an identical request for service from user equipment at least two of the plurality of cells. Some implementations may include further enhancements. In particular, inter-base station co-ordination may be used for confusion resolution or to assist in fine-tuning a sub-optimal identifier allocation. Such an approach may allow identification of a correct cell even when an identifier is heavily re-used, either by accident or intentionally. It will be appreciated, however, that inter-base station co-ordination requires additional signalling within a network.

When establishing a connection user equipment is typically operable to send, for example, a random access preamble using PRACH resources towards a cell (or cells in the case of cell confusion). A network can then exploit inter-base station co-ordination to decide which cell amongst those cells which were able to listen to the random access preamble is the most appropriate to serve that user equipment, but it is also possible for a network to recognise that cell confusion is occurring and take steps to resolve that confusion by changing identifier allocation. If more than one cells receives a message from user equipment, it may serve as a trigger to adapt a given cell identifier allocation.

Arrangements may be such that the wireless communications network comprises: a heterogeneous network deployment and the plurality of cells comprise a plurality of small cells deployed within a coverage area of a macrocell. In one example, the wireless communications network comprises: a heterogeneous network deployment configured to operate according to phantom cell techniques. In one embodiment, the wireless communications network comprises: a heterogeneous network deployment configured to operate having a split control plane and user plane such that the frequency and time resources of Physical Random Access Channels (PRACH) for an umbrella macro cell are shared by all the underlay small cells.

Arrangements may be such that the restricted number of cell identifiers comprise: Channel State Information-Reference Signals (CSI-RSs) or a similar cell pilot signal. Accordingly, in order to provide an improved fingerprinting method, CSI-RS assignment is performed intelligently. In particular, arrangements operate to implement a method for assigning CSI-RSs to small cells which aims to create geographically unique CSI-RSs patterns across a network.

A second aspect provides a network control node in accordance with claim Arrangement may be such that the hierarchical grouping is performed based upon an indication of size of a region of radio coverage supported by each cell-type.

Arrangements may be such that the allocation of the cell identifiers is performed sequentially, starting with cells determined to be at the highest layer of the hierarchical grouping.

Arrangements may be such that the allocation logic is operable to: determine the restricted number of cell identifiers is insufficient to meet said allocation criteria; and identify a cell in a lower layer of the hierarchical grouping to be promoted to a higher layer to meet the allocation criteria.

Arrangements may be such that the node comprises instruction logic operable to instruct the identified cell to make transmissions at an increased transmit power.

Arrangements may be such that the allocation logic is operable to adapt the allocation of cell identifiers on the basis of a report from at least two of the plurality of cells indicative of receipt of an identical request for service from user equipment at least two of the plurality of cells.

Arrangements may be such that the wireless communications network comprises: a heterogeneous network deployment and the plurality of cells comprise a plurality of small cells deployed within a coverage area of a macrocell.

Arrangements may be such that the wireless communications network comprises: a heterogeneous network deployment configured to operate according to phantom cell techniques.

Arrangements may be such that the restricted number of cell identifiers comprise: Channel State Information-Reference Signals (CSI-RSs) or any other similar pilot-like signal.

A third aspect provides a computer program product in accordance with claim 13.

Arrangements may include a method of handling user equipment mobility in a wireless communications network having a restricted number of cell identifiers allocated to a plurality of cells in accordance with the method of the first aspect; the method comprising: instructing user equipment to perform measurement of a received signal indicative of the cell identifiers allocated to one layer of the determined hierarchical grouping. In particular, smart allocation of identifiers can help to result in the use of fewer identifiers to identify a given number of small cells. As a result, user equipment may need to keep track of a reduced number of identifiers and handover measurements may be faster, whilst battery life is saved. Furthermore, user equipment moving at high velocity, which may not need to be handed over to small cells due to their short time of stay within a coverage region supported by a small cell, may take received signal strength or quality measurements only on those identifiers belonging to the subsets of identifiers assigned to higher network tiers. As a result, a reduced number of identifiers handled or monitored by high velocity user equipment may be implemented and their handover measurements can be even faster at a lesser battery life cost. Furthermore, signalling may be saved, since fast user equipment are unlikely to start a handover procedure.

Arrangements may provide a computer program product operable, when executed on a computer, to perform the method described above.

Arrangements may provide a network control node configured to handle user equipment mobility in a wireless communications network having a restricted number of cell identifiers allocated to a plurality of cells in accordance with the method of the first aspect; the network control node comprising: mobility management logic operable to instruct user equipment to perform measurement of a received signal indicative of the cell identifiers allocated to one layer of the determined hierarchical grouping.

Arrangements may include a method of resolving cell confusion on receipt of a request for service from user equipment in a wireless communications network having a restricted number of cell identifiers allocated to a plurality of cells in accordance with the method of the first aspect; the method comprising: receiving an indication of signal strength of a request for service received from user equipment by at least two of the plurality of cells; comparing the indications of signal strength, and instructing the cell at which the request for service was received with the greater signal strength to provide service to the user equipment.

Arrangements may recognise that some implementations may include further enhancements. In particular, inter-base station co-ordination may be used for confusion resolution. Such an approach may allow identification of a correct cell even when identifiers are heavily re-used, either by accident or intentionally. It will be appreciated, however, that inter-base station co-ordination requires additional signalling within a network.

For example, when establishing a connection user equipment is typically operable to send a random access preamble using PRACH resources towards a cell, or cells in the case of confusion, with the strongest received CSI-RSs strength. The network can then exploit inter-base station co-ordination to decide which cell amongst those cells which were able to listen to the random access preamble is the most appropriate to serve that user equipment. The most appropriate cell could be the one that receives the random access preamble from user equipment with the highest received signal strength or quality. After co-ordination the most adequate cell may be operable to follow the random access procedure and send a standardised random access response to the user equipment. It will also be appreciated that a similar procedure can be used during a call in relation to handover purposes, but that such methods can be based on monitoring received uplink signal strength at all candidate base stations rather than a RACH connection request.

Arrangements may provide a computer program product operable, when executed on a computer, to perform the method described above.

Arrangements as may provide a network control node operable to resolve cell confusion on receipt of a request for service from user equipment in a wireless communications network having a restricted number of cell identifiers allocated to a plurality of cells in accordance with the method of the first aspect; the network control node comprising:
comparison logic configured to receive an indication of signal strength of a request for service received from user equipment by at least two of the plurality of cells and compare the indications of signal strength; and instruction logic operable to instruct the cell at which the request for service was received with the greater signal strength to provide service to the user equipment.

Further particular and preferred aspects are set out in the accompanying independent and dependent claims. Features of the dependent claims may be combined with features of the independent claims as claimed.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates handover failure rate in a number of network deployments operation without discontinuous reception;
Figure 2a illustrates schematically a traditional cellular network with a control plane tied to a data plane;
Figure 2b illustrates a network characterised by a split of control plane and data plane;
Figures 3a and 3b illustrate CSI-RS collision and confusion respectively;
Figure 4 illustrates network tiers in a heterogeneous network;
Figure 5 illustrates an example of CSI-RS partitioning and assignment;
Figure 6 illustrates a coordinated random access procedure with confusion avoidance; and
Figure 7 illustrates an example of automatic fine tuning of CSI-RS to a small cell assignment.

### DESCRIPTION OF THE EMBODIMENTS

Before discussing the embodiments in any more detail, first an overview will be provided. It will be appreciated that mobility performance may be enhanced in numerous ways. One solution which may be used to enhance mobility performance is that of a phantom cell. The "phantom cell" or "soft-cell" approach is based upon the concept of dual connectivity.

Figure 2a illustrates schematically a traditional cellular network with a control plane tied to a data plane and Figure 2b illustrates a network characterised by a split of control plane and data plane. The phantom cell concept is implemented such that a small cell within a heterogeneous network serves user equipment only on the data plane, whilst a macro cell is primarily reserved to serve user equipment in relation to control plane provision. That macro cell is also operable to provide data communication to user equipment which are not connected to any small cell.

The phantom cell concept assumes that the control plane is provided by a macro cell to maintain good connectivity and mobility to user equipment. The macro cell also works as a normal cell supporting both control plane and user plane signalling for those user equipment connected directly to the macro cell. On the other hand, the user plane can be provided by a small cell to boost user data rate where it is more appropriate for user equipment to be connected to that small cell. However, in relation to a deployment in which phantom cell techniques are deployed, the small cells are not conventional "cells" since they are not configured with cell-specific signals or channels; that is to say, there are no Primary or Secondary Synchronisation Signals (PSS/ SSS), Cell-specific Reference Signals (CRS), Master Information Blocks or System Information Blocks (MIB/ SIB) or similar. As a result, the small cells are essentially "invisible" to user equipment operating in a conventional manner. The small cells in such a deployment are intended only to carry user traffic. RRC connection procedures between a phantom cell and a user equipment (for example, procedures such as channel establishment and channel release) are managed by the macro cell. In essence, a phantom cell provides a one-to-one connection to user equipment. However, that one-to-one connection to user equipment is not one in which there are cell-specific signals or channels. Such a phantom cell deployment can result in a flexible and efficient overall network operation.

One consequence of implementation of a phantom cell deployment is that typically only one scheduler, either that of a macro cell or a small cell, is in charge of providing data (including PFICH, PDCCH and PHICH channels) to a user. Such an arrangement simplifies network operation in comparison with a network operation in which co-ordination of more than one scheduler is required. It will be understood that a phantom cell network deployment may allow a network operator to maintain basic mobility and connectivity performance to user equipment even when only a small number of small cells are deployed.

### Cell Identification

Within a phantom cell network deployment it will be appreciated that typically a small cell cannot be identified on the basis of explicit control plane features; for example, acquisition signals, system information and/or cell reference signals. As a result, other implicit means of small cell identification are required in order to implement an appropriate cell selection procedure, that cell selection procedure being a prerequisite of any efficient user plane transmission mechanism.

It will be appreciated that it is possible to substitute explicit small cell identifiers for implicit small cell identifiers typically unrelated to handovers. In particular, the usage of Channel State Information Reference signals (CSI-RSs) can be used to provide a means of small cell identification. It has also been recognised that it is possible to use cell selection and re-selection and handover mechanisms which operate on the basis of Channel State Information Reference signals (CSI-RSs) and, in particular, their strength or quality measurements. Furthermore, it will be appreciated that other types of signal can be used in a similar manner; for example, enhanced synchronisation signals for small cells in orthogonal deployments. However, it will also be appreciated that the number of CSI-RSs available within a network may be limited. In particular, CSI-RSs available for small cell identification may be limited to 40 by LTE standards, and such a limit on available potential identifiers may cause some cell identification issues. In reality, in relation to CSI-RSs values which maybe available, the number is lower than 40 since some reference signals are reserved to enable MIMO or COMP operation. However, it will also be appreciated that use of a reduced number of identifiers (for example, CSI-RSs), in order to help identify small cells, may help to speed up handovers and mobility of user equipment within a network and assist in the saving of user equipment battery life since there is a reduced number of measurements that user equipment may have to perform for cell selection and handover procedures.

It will be appreciated that in comparison to standard cellular networks not operating using a phantom cell concept, there are a significantly reduced number of available potential identifiers. In a typical non-split cellular network, 504 Physical Cell Identifiers (PCIs) are typically available. It will be appreciated that the limited CSI-RSs availability requires an efficient CSI-RSs management system in order to avoid collision and confusion problems in small cell identification processes.

An identifier (for example, CSI-RSs) collision occurs if at least two neighbouring small cells use the same identifier (CSI-RSs) as an indication of their identity or, in other words, their "soft identity". An identifier collision leads to an incorrect cell identification and poor channel estimation by user equipment in the vicinity of those colliding cells. Identifier confusion occurs when, for example, a macro cell is not able to distinguish amongst multiple small cells using the same identifier; for example, CSI-RSs. Consequently, macro cell control mechanisms, such as RRC management, may be performed incorrectly and cause a disruption to data service of user equipment.

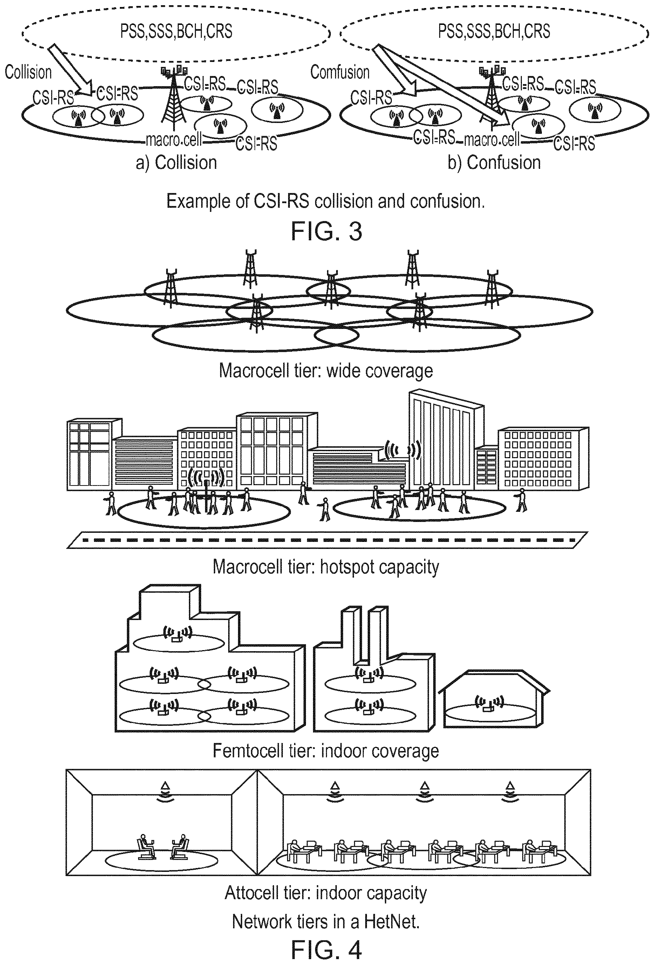

Figure 3 illustrates schematically examples of both identifier collision and identifier confusion. It will be appreciated that the collision problem may be dynamically resolved in a relatively simple manner since small cells may be operable to detect whether neighbouring small cells are using the same identifier and take corrective action by configuring themselves to use a different identifier. Such distributed schemes can be shown to converge to a stable solution. However, it will be appreciated that small cells are typically unable to find out whether a given identifier is in use by other remote small cells within the same umbrella macro cell coverage, since the coverage area of the macro cell is often very large.

Aspects and embodiments may help to solve or mitigate the confusion problem. Aspects and embodiments relate to a network-based method to efficiently avoid or mitigate likelihood of encountering a confusion problem whilst using a limited number of identifiers; for example, CSI-RSs. The benefits of such an approach include compliance with existing network standards.

Aspects and embodiments operate to assign identifiers (for example, CSI-RSs values) to small cells in a heterogeneous network in a hierarchical manner. That hierarchical manner is implemented having regard to different small cell base stations and network features (for example, output power, cell size, inter-cell distance and similar) and may be operable to use fingerprint methods to ensure that small cell confusion resolution occurs. Aspects and embodiments operate to be compatible with existing standards and to work with legacy user equipment handsets.

It will be appreciated that in a network deployment in which phantom cells are utilised, standard methods used to resolve identity confusion between cells may not be applicable; in particular, in an arrangement in which there is a split of control plane and user plane such as that of the phantom cell configuration. Small cells are not operable to broadcast system information.

Cell identification within a network have historically been resolved using various techniques, including smart allocation of primary cell identifiers (PCIs) and fingerprint methods.

In order to avoid PCI confusion in a network, a source cell in a typical homogeneous UMTS or LTE network typically operates to ensure user equipment is configured to obtain system information relating to a target cell. Following acquisition of system information, user equipment operate to transmit a measurement report to the source cell. The measurement report comprises: an evolved cell global identifier (ECGI), tracking area identity, close subscriber group identity (CSG), CSG indicator and CSG membership status of a target cell. Since the ECGI is unique to each cell, even if multiple cells share the same PCI, knowledge of the ECGI of the target cell at, for example, an RNC or MME, can resolve any ambiguity at the network due to PCI confusion.

Such an approach is not applicable in a phantom cell network deployment since in such a deployment, the small cells do not broadcast any system information, Furthermore, performing the method is time consuming and may not be able to resolve confusion in good time to support operation of highly mobile user equipment. Delays in resolving confusion may lead to handover failures.

According to fingerprint methods, in order to differentiate amongst neighbouring cells using the same identifier (for example, PCI) a network may be operable to use knowledge of the identifiers with cell geographical locations within the network and/or user equipment reported received signal strength or quality measurements.

In particular, a macrocell can use user equipment reported "received signal strength" measurements of pilot signals of a target cell together with those relating to any neighbouring cell(s). The macro cell is then operable to search for a "best match" between reported user equipment measurements and a fingerprint database comprising an extensive number of pilot signal measurements, for example, all small cells within a macrocell coverage region. That database comprises a plurality of parameters in relation to each cell in multiple given geographical locations and reported historical user equipment measurements. That database can be pre-stored or dynamically built up within the network.

Fingerprint methods may fail to provide a good performance if the number of identifiers is not sufficiently large and/or if the identifiers are not assigned to cells such that a large number of distinct identifiable measurement patterns exist as a function of user equipment location within a network. It will be appreciated that it is the measurement patterns which exist as a function of user equipment location of the network which is the primary identification input of such a fingerprinting method.

Such fingerprinting methods also require that fingerprint databases are dynamically updated according to changes in network topology; for example, the deployment of further small cells within a network. That dynamic updating may be a complex task if the process is not automatic.

Aspects and embodiments implement methods which aim to mitigate cell identifier confusion in networks; for example, CSI-RSs confusion. Those networks may comprise network deployments operating to split control plane and user plane operation according to a phantom cell method. Aspects and embodiments may be used both when user equipment is in a connected mode and wishes to hand over to a small cell, and when user equipment is in idle mode and simply wishes to connect to a small cell.

Aspects and embodiments may incorporate a means to assign identifiers to small cells in such a way that the performance of fingerprinting approaches when resolving potential identifier confusion can be improved. Fingerprinting methods may be such that they are able to operate even when a low number of identifiers are used within a network deployment.

Possible enhancements of arrangements for assigning identifiers to cells may also involve the use of inter base station co-ordination to enhance identifier confusion resolution. Such inter base station co-ordination may be used to fine-tune the assignment of identifiers to, for example, small cells.

It will be appreciated that since identifier collision resolution may allow re-use of identifiers amongst small cells, methods according to arrangements described may help to reduce the number of measurements that user equipment may need to perform in relation to different identifiers in order to perform cell selection, re-selection and/or handover procedures. A reduction of measurements may, of course, enhance mobility performance and user equipment battery life.

### Assignment of Identifiers

Identifiers (for example, CSI-RSs) can be assigned to small cells such that the performance of a standard fingerprinting method for resolving confusion on the basis of identification or matching radio frequency trace patterns can be improved. Such an assignment method may help to reduce the number of measurements that user equipment operating within a network deployment may need to perform in relation to various possible identifiers. Those measurements are typically taken in relation to cell selection, reselection and handover procedures, and may assist in ensuring efficient operation of a network.

Arrangements operate such that assignment of a limited number of identifiers is performed such that those identifiers are re-used as much as possible whilst ensuring that there is always at least one confusion-free identifier within a geographical area or cluster of small cells. Such a confusion-free allocation of a limited number of identifiers may provide a reference point for fingerprint methods in relation to resolving confusion. In order to implement such an assignment of identifiers a method based on the concept of network tiering is chosen.

A HetNet usually comprises a number of different network tiers characterised by different base stations and network features, including, for example, cost, size, power, range, inter-site distance and load of base stations.

Figure 4 illustrates schematically possible network tiers within a heterogeneous network. In the heterogeneous network of Figure 4, at a top tier, macro cells provide wide coverage to hide velocity user equipment. Metro cell overlays provide capacity at targeted indoor or outdoor user hotspot areas; for example, shopping malls or bus stops, those which may provide coverage for low velocity user equipment. Femto cells overlay macro cells and metro cells to provide indoor coverage to user equipment in residential and enterprise scenarios. Atto cells lie at the bottom of the tier structure and are provided to provide the highest level of capacity to user equipment.

Methods according to some arrangements operate according to the following steps of hierarchical assignment of identifiers (for example, CSI-RSs) to small cells within a network:
i) **Divide the set of identifiers**
   One stage in some arrangements is such that the available identifiers which may be used for small cell identification are divided into sub-sets. The sub-set number and the size of the sub-sets can be adapted dynamically according to the number of network tiers and the number of cells in those network tiers respectively.
ii) **Assignment of identifier sub-sets**
   According to some arrangements the dynamically adapted sub-sets of identifiers are assigned to an appropriate small cell tier within the network; for example, metro cells, pico cells or atto cells and similar.
iii) **Allocation of specific identifiers within a tier**
   Within a given small cell tier and within the available assigned sub-set of identifiers allocation of specific identifiers to individual cells within a tier takes place. That allocation uses spatial re-use of the available identifiers and takes into account the following constraint: an identifier in a particular small cell tier (or sub-set) can be re-used by multiple small cells within that tier if, and only if, those small cells are under the coverage of base stations of a higher small cell tier which use different identifiers from each other. The base stations of the higher small cell tier provide a unique reference to allow for confusion resolution through fingerprinting methods.

It will be appreciated that such a hierarchical identifier assignment method in relation to small cells may be that user equipment determined to be moving at high velocities (which therefore may not need to be handed over to any small cells due to a short time of stay) may be configured to take received signal strength or quality measurements only in relation to those identifiers which belong to the sub-set of identifiers assigned to higher network tiers. As a result, due to the limited number of sub-set identifiers which user equipment needs to measure, handover measurements may occur faster and user equipment battery life may be further extended.

Some arrangements operate such that a network deployment may use inter-base station co-ordination to further mitigate identifier confusion issues. In particular, inter-base station co-ordination may be used to help to select the most appropriate cell to serve user equipment even in the presence of some confusion. That help may operate on the basis of use of the random access procedure. The most appropriate cell for a given user equipment may be the one which receives a random access preamble from that user equipment with the highest received signal strength or quality. Once a selection decision is made through inter-base station co-ordination, the selected small cell can proceed with the standardised random access response to the user equipment as defined by existing standards, whilst the other cells ignore the access request. The inter-base station co-ordination may operate such that a macro cell takes decisions on the basis of small cell reports on the strength of received user equipment preambles. According to such arrangements, any confusion during cell selection or re-selection can be mitigated in a user equipment backward compatible manner. Since such arrangements rely on use of random access procedure to resolve confusion, it may only be used if user equipment is operating in an idle mode and not if user equipment is in a connected mode.

Alternative arrangements may operate such that, if in connected mode, the network may operate such that uplink signals received by multiple base station candidates can be used in combination with inter-base station co-ordination to resolve confusion in the same manner as that described above in relation to random access requests.

### Example Arrangement

Described in more detail below is one possible application which can operate to avoid CSI-RSs confusion in networks with a split control plane and a user plane. The method can be used both when user equipment is in connected mode and wishes to hand over to a small cell and when user equipment is in idle mode and wishes to connect to a small cell.

It will be appreciated that in a network having a split control plane and user planes the frequency and time resources of Physical Random Access Channels (PRACH) for an umbrella macro cell are shared by all the underlay small cells. The particular resources allocated to user equipment are specified to that user equipment by the umbrella macro cell system information. As a result, all cells are able to receive a random access preamble sent by user equipment.

### CSI-RSs to Small Cell Assignment to Facilitate Fingerprint Method Operation

It will be appreciated that any fingerprinting method aims to differentiate between cells. In the arrangement described herein, in order to differentiate amongst neighbouring small cells having the same CSI-RSs under the same umbrella macro cell during cell selection, cell re-selection and handover procedures, it is proposed that a network may use its knowledge of the small cell CSI-RSs; small cell geographical locations within the network and user equipment reported received signal strength and quality measurements taken over the CSI-RSs of the target cell and the neighbouring cells.

In order to provide an improved fingerprinting method, CSI assignment is performed intelligently. In particular, arrangements operate to implement a method for assigning CSI-RSs to small cells which aims to create geographically unique CSI-RSs patterns across a network.

Assignment methods are implemented such that CSI-RSs are assigned to small cells in a manner which aims to ensure that CSI-RSs are re-used as much as possible, whilst ensuring that there is always at least one confusion-free CSI-RSs within a geographical area or within a cluster of small cells. If it is possible to perform such assignment a confusion-free CSI-RSs pattern can provide a unique reference for fingerprint methods and allow for the resolving of CSI-RSs confusion in relation to neighbouring cells.

Assignment methods operate according to tiering of cells within a network.

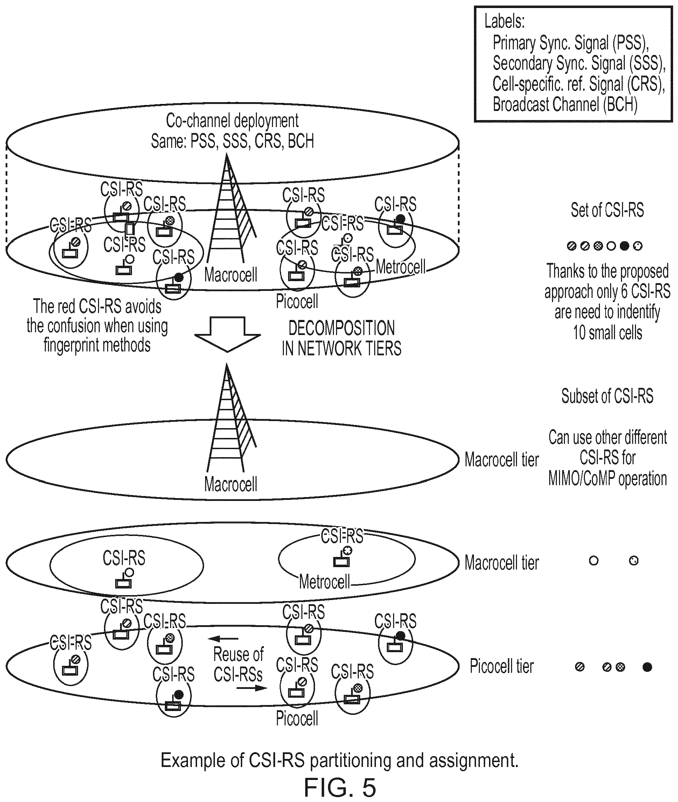

Figure 5 illustrates schematically one example of CSI-RSs partitioning and assignment. Figure 5 illustrates schematically a heterogeneous network having three network tiers: a macro cell tier; a metro cell tier; and a pico cell tier. In the example shown in Figure 5 there is one macro cell, two metro cells and eight pico cells. Half of those pico cells are under the coverage of one metro cell and the other pico cells are under the coverage of the other metro cell. Since metro cells use a larger base station power than pico cells their range and inter-site distance is typically larger.

In the arrangement shown in Figure 5, an operator has a set of CSI-RSs given by *C*=*{S₁,* ..., *Sₛ,* ..., *S_{S}}* assigned for the purposes of small cell identification within the network. In this particular example, the CSI-RSs typically used for MIMO and COMP purposes are not included within the available CSI-RSs for small cell identification. *Sₛ* comprises one element of the set (one CSI-RSs) and S is the cardinality of the set (total number of CSI-RSs).

According to one arrangement, an assignment method occurs according to the following steps: according to the arrangement illustrated in Figure 5, the following assignment is implemented: the set of available CSI-RSs *C* is divided into a number *M*, ***Cₘ*** according to the number *T* of small cell network tiers (for example, metro cell and pico cell in the example of Figure 5), where
- M ≥ T,
- ***C***=*C₁* ∪ *Cₘ* ∪ *Cₙ* ∪ *C_{M}, Cₘ* ∩ *Cₙ*= ∅ ∀m,n and m#n, and
- ***Cₘ***=*{S₁ₘ,* ..., *Sₚₘ,* ..., *Sₚₘ}* being *Sₘₚ* one element of the subset ***Cₘ*** and *Pₘ* the cardinality of the subset *Cₘ*.

Operators may tune number *M* and size *Pₘ* of subsets according to their network deployment and network statistics to achieve the desired performance. That is to say, the method described can be commissioned to be suited to a particular network deployment. Moreover, the size of the subset *Pₘ* does not need to be the same for all subsets *Cₘ* and should be proportional to the number of small cells in each network tier.

In the example of Figure 5, the number of available CSI-RSs for the purpose of small cell identification is six, S=6, and there are two small cell network tiers (that is to say, metro cells and pico cells), so T=2. As a result, the available set of CSI-RSs is split into two subsets, *C₁* and *C₂.* The first subset comprises two CSI-RSs (P₁=2) since there are two metro cells. The second subset consists of four CSI-RSs (P₂=4) since that is the maximum number of small cells per cluster in the lower network tier.

The method in the example of Figure 5 then operates to assign each subset to a different small cell tier. In the example of Figure 5, *C₁* is allocated to the metro cell tier and *C₂* is allocated to the pico cell tier.

Within each small cell tier the assignment method operates to assign allocated CSI-RSs to individual small cells and re-use the allocated CSI-RSs in such a manner that a CSI-RSs of a lower small cell tier may be re-used by multiple small cells in that small cell tier if, and only if, those small cells are under the coverage of base stations of higher small cell tiers that use different CSI-RSs. It will be appreciated that these CSI-RSs belong to the subsets of CRS assigned to such a higher small cell tier. In such an instance it is the base station of the higher small cell tier which provides a unique reference for confusion resolution through user equipment measurements and fingerprinting methods.

Assignment methods recognise that since it is important to try to avoid collision a CSI-RSs should not be re-used amongst nearby small cells. The collision problem can be dynamically resolved since small cells can detect whether neighbouring small cells are using the same CSI-RSs and take corrective action by configuring use of a different CSI-RSs. Such distributed automatic schemes can be shown to converge to a stable solution.

In relation to the deployment illustrated schematically in Figure 5, it can be seen that six CSI-RSs are required to uniquely identify 10 small cells with the help of fingerprinting methods. Since user equipment located on the left-hand side of the illustrated macro cell coverage region may be operable to perform handover between the red metro cell and a nearby green pico cell, it will report a much higher received signal strength on the red metro cell CSI-RSs than on the blue metro cell CSI-RSs. The pico cell with the green CSI-RSs on the left-hand side of the macro cell coverage region (which is closer to the user equipment) can be uniquely differentiated from the pico cell with the same CSI-RSs on the right-hand side of the macro cell coverage region.

In other words, the CSI-RSs can be successfully re-used since the CSI-RSs of the metro cell in the higher network tier act as references which allow fingerprinting methods to resolve confusion.

Re-use of CSI-RSs at lower network tiers can help to result in the use of fewer CSI-RSs to identify a given number of small cells. As a result, user equipment may need to keep track of a reduced number of CSI-RSs and handover measurements may be faster, whilst battery life is saved.

From Figure 5 it is also possible to see that user equipment need not keep track of 10 CSI-RSs (one per cell for each of the two metro cells and eight pico cells) and only need to keep track of six CSI-RSs values. As a result, user equipment may be able to perform faster mobility measurements and experience enhanced battery life. User equipment moving at high velocity, which may not need to be handed over to small cells due to their short time of stay within a coverage region supported by a small cell, may take received signal strength or quality measurements only on those CSI-RSs belonging to the subsets of CSI-RSs assigned to higher network tiers. As a result, a reduced number of CSI-RSs handled by high velocity user equipment may be implemented and their handover measurements can be even faster at a lesser battery life cost. In particular, in relation to the implementation shown in Figure 5, a user equipment moving at a high velocity which does not need to be handed over the pico cells or metro cells does not need to keep track of all CSI-RSs dedicated to small cell identification and handover purposes, but only needs to keep track of the CSI-RSs assigned to the metro cells.

### Confusion Resolution Through Inter-Base Station Co-Ordination

Some implementations may include further enhancements. In particular, inter-base station co-ordination may be used for confusion resolution. Such an approach may allow identification of a correct cell even when a CSI-RSs is heavily re-used, either by accident or intentionally. It will be appreciated, however, that inter-base station co-ordination requires additional signalling within a network.

When establishing a connection user equipment is typically operable to send a random access preamble using PRACH resources towards a cell, or cells in the case of confusion, with the strongest received CSI-RSs strength. The network can then exploit inter-base station co-ordination to decide which cell amongst those cells which were able to listen to the random access preamble is the most appropriate to serve that user equipment. The most appropriate cell could be the one that receives the random access preamble from user equipment with the highest received signal strength or quality. After co-ordination the most adequate cell may be operable to follow the random access procedure and send a standardised random access response to the user equipment.

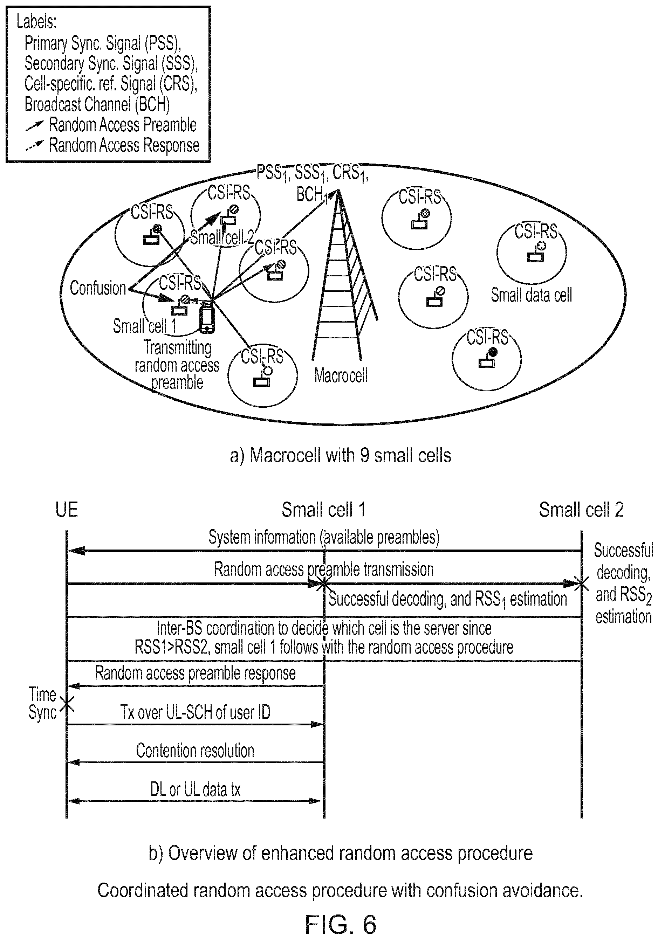

Figure 6 illustrates schematically co-ordination of random access procedure in which confusion avoidance methods are implemented. As shown in Figure 6, a user equipment may be operable to send a random access preamble towards small cell 1 and all surrounding cells are able to listen to that user equipment random access preamble since they share the same PRACH resources. However, only small cell 1 follows the random access procedure after inter-base station co-ordination methods are performed and sends a random access response. This is because small cell 1 receives the random access preamble from user equipment with the strongest received signal strength. Such methods can act to resolve confusion amongst small cell 1 and small 2 which share the same CSI-RSs, and any other cell, whilst the user equipment perform cell selection or cell re-selection. It will be appreciated that the use of inter base-station co-ordination in such a manner does not require new features at user equipment and therefore is user equipment backward compatible.

It will also be appreciated that a similar procedure can be used during a call in relation to handover purposes, but that such methods can be based on monitoring received uplink signal strength at all candidate base stations rather than a RACH connection request.

### Automatic Fine Tuning

According to some arrangements, inter-base station co-ordination, as described in the previous section, can be used to identify whether more than one small cell re-uses the same CSI-RSs if more than one small cell is operable to use the same CSI-RSs in a region surrounding a given user equipment. That information can be used by a network to identify base stations which could require reassignment of their CSI-RSs so that all cells can be identified based on their CSI-RSs alone.

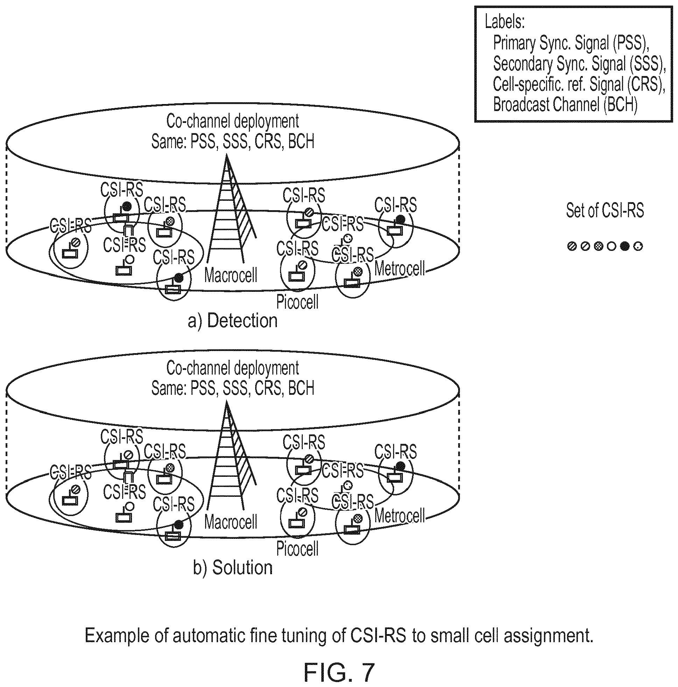

Figure 7 illustrates schematically one example of automatic fine tuning of CSI-RSs allocation to small cells. In the example of Figure 7, the CSI-RSs allocation has been performed such that two cells on the left side of the network re-use the same CSI-RSs. It may be possible to identify that allocation if both cells measure the random access preamble or received uplink power of a user equipment and an insufficient difference is detected by a network to resolve which small cell the user equipment should select, re-select or hand over to. The network maybe operable to refine the original assignment by, for example, changing one of those assigned CSI-RSs as shown in Figure 7b.

It will be appreciated that by adopting the proposed network configuration and appropriate cell assignment procedure it may be possible to deploy metro cells, pico cells and similar in large cities and hotspot areas whilst allowing seamless mobility for connected and idle user equipment. Moreover, since the proposed confusion avoidance procedures may allow re-use of a limited set of available identifiers, a procedure in accordance with described aspects may allow the deployment of a larger number of metro cells or pico cells in hotspot areas.

### Alternative Implementations

It will be appreciated that techniques described in relation to small cells operating in a macro cell network may also be used at lower network tiers. For example, in a cluster of small cells of a low network tier there may not be a small cell covering that network tier in a higher network tier. For example, there may exist within a network a cluster of five pico cells where there is no metro cell. One of the small cells of the pico cell cluster may be promoted to "cluster head" and take a CSI-RSs from the subset of CSI-RSs belonging to an immediately higher network tier. In this way, the unique CSI-RSs identity required to re-use the subset of CSI-RSs belonging to a lower network tier in a different location using fingerprint methods is provided. To ensure sufficient visibility for the pilot signal of the cluster head, some implementations maybe such that its pilot transmission power maybe increased in combination, for example, with an appropriate handover threshold such that the signal can be received in a large enough area but that its effective coverage area does not change.

It will be appreciated that in order to increase the number of CSI-RSs available for small cell identification purposes, different CSI-RSs patterns, in which CSI-RSs symbols are not transmitted in all resource blocks but only in a specific number of them, can be used. According to such an approach, new "soft" CSI-RSs identities can be created, provided that the network is operable to instruct user equipment to take measurement on specific resource blocks.

It will be appreciated that in networks having a split control plane user plane (those implementing, for example, a phantom cell network deployment), identifiers such as CSI-RSs can be used as an implicit form of small cell identification. However, since the number of identifiers may be significantly lower than those used at the macro cell layer (namely, primary PCI identifiers) there maybe some difficulties associated with such small identification procedures. In particular, cell confusion issues may arise.

Identifier assignment methods in accordance with aspects and embodiments may allow network operators to efficiently resolve identifier confusion whilst using a low number of identifiers. Aspects also recognise that if user equipment is operable to track only a reduced number of identifiers, for example in dependence upon user equipment speed or tier association, fast handover measurements and overall battery saving may be achieved.

In networks having a split control and user plane, small cells do not transmit system information and identifier; for example, CSI-RSs confusion cannot be resolved through typical ECGI retrieval as may be possible in standard networks. Similarly, current fingerprinting techniques performed by a network or by user equipment are likely to be too slow to resolve identifier confusion in relation to high velocity user equipment moving through the coverage area of a large number of small cells.

Aspects and embodiments provide an assignment of identifiers in which confusion avoidance techniques can be tailored to allow operation of networks with split control and user planes, those networks having a large number of small cells. The assignment of identifiers can allow, according to aspects and embodiments, efficient re-use of a restricted number of identifiers.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method performed at a network control node in a heterogeneous network deployment; the method comprising allocating a restricted number of cell identifiers to a plurality of small cells deployed within a radio coverage area of a macrocell operating in said heterogeneous network deployment; said plurality of small cells being arranged to comprise at least one region of overlapping radio coverage; said method comprising:
determining a cell-type for each of said plurality of small cells;
establishing, based on said determined cell type, a hierarchical grouping of said plurality of small cells;
providing a different sub-set of said restricted number of cell identifiers to each layer of said hierarchical grouping; and
allocating one of said cell identifiers to each of said plurality of small cells in dependence upon said determined cell type and said determined hierarchical grouping,
said allocation being performed according to allocation criteria such that a cell identifier can be re-used within a lower layer of said hierarchical grouping when the cells to which that re-used cell identifier is being allocated are within a coverage region of different cells in a higher layer of said hierarchical grouping and those different cells have been allocated non-identical cell identifiers, and wherein allocation comprises determining whether said restricted number of cell identifiers is insufficient to meet said allocation criteria; and, if so,
identifying a cell in a lower layer of said hierarchical grouping to be promoted to a higher layer to meet said allocation criteria.

2. A method according to claim 1, wherein said hierarchical grouping is performed based upon an indication of size of a region of radio coverage supported by each cell-type.

3. A method according to claim 1 or claim 2, wherein said allocation of said cell identifiers is performed sequentially, starting with cells determined to be at the highest layer of said determined hierarchical grouping.

4. A method according to any preceding claim, comprising: instructing said identified cell in said lower layer of said hierarchical grouping to be promoted to a higher layer to make transmissions at an increased transmit power.

5. A method according to any preceding claim, comprising: adapting said allocation of cell identifiers on the basis of a report from at least two of said plurality of small cells indicative of receipt of an identical request for service from user equipment at said at least two of said plurality of small cells.

6. A method according to any preceding claim, in which the heterogeneous network deployment is configured to operate according to phantom cell techniques.

7. A method according to any preceding claim, wherein said restricted number of cell identifiers comprise: Channel State Information-Reference Signals, CSI-RSs.

8. A method according to any one of claims 1 to 7, further comprising:
instructing user equipment to perform measurement of a received signal indicative of said cell identifiers allocated to one layer of said hierarchical grouping.

9. A method according to any preceding claim, further comprising: resolving cell confusion on receipt of a request for service from user equipment by:
receiving an indication of signal strength of a request for service received from user equipment by at least two of said plurality of small cells; and;
comparing said indications of signal strength and instructing the cell at which said request for service was received with the greater signal strength to provide service to said user equipment.

10. A network control node in a heterogeneous network deployment; the network control node being configured to allocate a restricted number of cell identifiers to a plurality of small cells deployed within a radio coverage area of a macrocell operating in said heterogeneous network deployment, said plurality of small cells being arranged to comprise at least one region of overlapping radio coverage; said network control node comprising:
determination logic configured to determine a cell-type for each of said plurality of small cells; hierarchy establishment logic operable to establish, based on said determined cell type, a hierarchical grouping of said plurality of small cells; and allocation logic operable to provide a different sub-set of said restricted number of cell identifiers to each layer of said hierarchical grouping; and allocate one of said cell identifiers to each of said plurality of small cells in dependence upon said determined cell type and said hierarchical grouping, said allocation being performed such that a cell identifier can be re-used within a lower layer of said hierarchical grouping when the cells to which that re-used cell identifier is being allocated are within a coverage region of different cells in a higher layer of said hierarchical grouping and those different cells have been allocated non-identical cell identifiers; wherein said allocation logic is configured to determine whether said restricted number of cell identifiers is insufficient to meet said allocation criteria; and, if so,
identify a cell in a lower layer of said hierarchical grouping to be promoted to a higher layer to meet said allocation criteria.

11. A network control node according to claim 10, further configured to handle user equipment mobility said network control node comprising:
mobility management logic operable to instruct user equipment to perform measurement of a received signal indicative of said cell identifiers allocated to one layer of said hierarchical grouping.

12. A network control node according to claim 10 or claim 11, further operable to resolve cell confusion on receipt of a request for service from user equipment, said network control node comprising:
comparison logic configured to receive an indication of signal strength of a request for service received from user equipment by at least two of said plurality of small cells and
compare said indications of signal strength; and instruction logic operable to instruct the cell at which said request for service was received with the greater signal strength to provide service to said user equipment.

13. A computer program product operable, when executed on a computer, to perform the method of any one of claims 1 to 9.

## Patentansprüche

1. Verfahren, das an einem Netzwerk-Steuerknoten in einer heterogenen Netzwerkumgebung durchgeführt wird;
wobei das Verfahren das Zuweisen einer begrenzten Anzahl von Zellenkennungen zu einer Vielzahl von kleinen Zellen umfasst, die innerhalb eines Funkabdeckungsbereichs einer Makrozelle eingesetzt werden, die in der heterogenen Netzwerkumgebung betrieben wird;
wobei die Vielzahl von kleinen Zellen derart ausgelegt ist, dass sie mindestens einen Bereich mit überlappender Funkabdeckung umfasst;
wobei das Verfahren umfasst:
Ermitteln eines Zellentyps für jede der Vielzahl von kleinen Zellen;
Erstellen, auf der Grundlage des ermittelten Zellentyps, einer hierarchischen Gruppierung der Vielzahl von kleinen Zellen;
Bereitstellen einer anderen Untergruppe der begrenzten Anzahl von Zellenkennungen für jede Ebene der hierarchischen Gruppierung; und
Zuweisen einer der Zellenkennungen zu jeder der Vielzahl von kleinen Zellen in Abhängigkeit von dem ermittelten Zellentyp und der ermittelten hierarchischen Gruppierung, wobei die Zuweisung gemäß Zuweisungskriterien durchgeführt wird, sodass eine Zellenkennung innerhalb einer niedrigeren Ebene der hierarchischen Gruppierung wiederverwendet werden kann, wenn sich die Zellen, denen diese wiederverwendete Zellenkennung zugewiesen wird, innerhalb eines Abdeckungsbereichs von anderen Zellen in einer höheren Ebene der hierarchischen Gruppierung befinden und diesen anderen Zellen nicht-identische Zellenkennungen zugewiesen wurden, und wobei die Zuweisung das Ermitteln umfasst, ob die begrenzte Anzahl von Zellenkennungen nicht ausreicht, um die Zuweisungskriterien zu erfüllen; und wenn ja,
Identifizieren einer Zelle in einer niedrigeren Ebene der hierarchischen Gruppierung, die auf eine höhere Ebene heraufgestuft werden soll, um die Zuweisungskriterien zu erfüllen.

2. Verfahren nach Anspruch 1, wobei die hierarchische Gruppierung auf der Grundlage einer Angabe der Größe eines von jedem Zellentyp unterstützten Bereichs der Funkabdeckung durchgeführt wird.

3. Verfahren nach Anspruch 1 oder Anspruch 2, wobei die Zuweisung der Zellenkennungen sequenziell durchgeführt wird, beginnend mit Zellen, die als auf der höchsten Ebene der ermittelten hierarchischen Gruppierung befindlich ermittelt werden.

4. Verfahren nach einem der vorstehenden Ansprüche, umfassend:
Anweisen der identifizierten Zelle auf der niedrigeren Ebene der hierarchischen Gruppierung, die auf eine höhere Ebene heraufgestuft werden soll, Übertragungen mit einer erhöhten Sendeleistung durchzuführen.

5. Verfahren nach einem der vorstehenden Ansprüche, umfassend:
Anpassen der Zuweisung von Zellenkennungen auf der Grundlage eines Berichts von mindestens zwei der Vielzahl von kleinen Zellen, der darauf hinweist, dass mindestens zwei der Vielzahl von kleinen Zellen eine identische Dienstanforderung von einem Endgerät erhalten haben.

6. Verfahren nach einem der vorstehenden Ansprüche, wobei die heterogene Netzwerkumgebung dafür konfiguriert ist, gemäß Phantomzellenverfahren zu funktionieren.

7. Verfahren nach einem der vorstehenden Ansprüche, wobei die begrenzte Anzahl von Zellenkennungen umfasst: Channel State Information-Referenzsignale (CSI-RS).

8. Verfahren nach einem der Ansprüche 1 bis 7, das ferner umfasst:
Anweisen des Endgerätes, die Messung eines empfangenen Signals durchzuführen, das auf die Zellenkennungen hinweist, die einer Ebene der hierarchischen Gruppierung zugewiesen sind.

9. Verfahren nach einem der vorstehenden Ansprüche, das ferner umfasst:
Auflösen der Zellenkonfusion bei Empfang einer Dienstanforderung von einem Endgerät durch:
Empfangen einer Anzeige der Signalstärke einer Dienstanforderung, die von mindestens zwei der Vielzahl von kleinen Zellen von einem Endgerät empfangen wurde; und
Vergleichen der Anzeigen der Signalstärke und Anweisen der Zelle, bei der die Dienstanforderung mit der größeren Signalstärke empfangen wurde, dem Endgerät Dienste bereitzustellen.

10. Netzwerk-Steuerknoten in einer heterogenen Netzwerkeumgebung;
wobei der Netzwerk-Steuerknoten dafür konfiguriert ist, einer Vielzahl von kleinen Zellen, die in einem Funkabdeckungsbereich einer Makrozelle, die in der heterogenen Netzwerkumgebung betrieben wird, eingesetzt werden, eine begrenzte Anzahl von Zellenkennungen zuzuweisen, wobei die Vielzahl von kleinen Zellen derart ausgelegt ist, dass sie mindestens einen Bereich mit überlappender Funkabdeckung umfasst;
wobei der Netzwerk-Steuerknoten umfasst:
Ermittlungslogik zum Ermitteln eines Zellentyps für jede der Vielzahl von kleinen Zellen;
Hierarchieerstellungslogik, die auf der Grundlage des ermittelten Zellentyps eine hierarchische Gruppierung der Vielzahl von kleinen Zellen erstellen kann; und
Zuweisungslogik, die für jede Ebene der hierarchischen Gruppierung eine andere Untergruppe der begrenzten Anzahl von Zellenkennungen bereitstellen kann; und jeder der Vielzahl von kleinen Zellen in Abhängigkeit von dem ermittelten Zellentyp und der hierarchischen Gruppierung eine der Zellenkennungen zuweist, wobei die Zuweisung derart durchgeführt wird, dass eine Zellenkennung innerhalb einer niedrigeren Ebene der hierarchischen Gruppierung wiederverwendet werden kann, wenn sich die Zellen, denen diese wiederverwendete Zellenkennung zugewiesen wird, innerhalb eines Abdeckungsbereichs von anderen Zellen auf einer höheren Ebene der hierarchischen Gruppierung befinden und diesen anderen Zellen nicht-identische Zellenkennungen zugewiesen wurden;
wobei die Zuweisungslogik dafür konfiguriert ist zu ermitteln, ob die begrenzte Anzahl von Zellenkennungen nicht ausreicht, um die Zuweisungskriterien zu erfüllen; und wenn ja,
eine Zelle auf einer niedrigeren Ebene der hierarchischen Gruppierung, die auf eine höhere Ebene heraufgestuft werden soll, zu identifizieren, um die Zuweisungskriterien zu erfüllen.

11. Netzwerk-Steuerknoten nach Anspruch 10, der ferner dafür konfiguriert ist, die Mobilität eines Endgerätes zu handhaben, wobei der Netzwerk-Steuerknoten Folgendes umfasst:
Mobilitätsmanagementlogik, die das Endgerät anweisen kann, die Messung eines empfangenen Signals durchzuführen, das auf die Zellenkennungen hinweist, die einer Ebene der hierarchischen Gruppierung zugewiesen sind.

12. Netzwerk-Steuerknoten nach Anspruch 10 oder Anspruch 11, der ferner Zellenkonfusion bei Empfang einer Dienstanforderung von einem Endgerät auflösen kann, wobei der Netzwerk-Steuerknoten Folgendes umfasst:
Vergleichslogik zum Empfangen, von einem Endgerät, einer Anzeige der Signalstärke einer Dienstanforderung von mindestens zwei der Vielzahl von kleinen Zellen und zum Vergleichen dieser Anzeigen der Signalstärke; und
Anweisungslogik, die die Zelle anweisen kann, bei der die Dienstanforderung mit der größeren Signalstärke empfangen wurde, dem Endgerät Dienste bereitzustellen.

13. Computerprogrammprodukt, das bei Ausführung auf einem Computer dafür ausgelegt ist, das Verfahren nach einem der Ansprüche 1 bis 9 durchzuführen.

## Revendications

1. Procédé réalisé au niveau d'un nœud de commande de réseau dans un déploiement de réseau hétérogène ;
le procédé comprenant l'allocation d'un nombre restreint d'identifiants de cellule à une pluralité de petites cellules déployées au sein d'une zone de couverture radio d'une macrocellule fonctionnant dans ledit déploiement de réseau hétérogène ;
ladite pluralité de petites cellules étant agencées pour comprendre au moins une région de couverture radio à chevauchement ;
ledit procédé comprenant :
la détermination d'un type de cellule pour chacune de ladite pluralité de petites cellules ;
l'établissement, sur la base dudit type de cellule déterminé, d'un groupement hiérarchique de ladite pluralité de petites cellules ;
la fourniture d'un sous-ensemble différent dudit nombre restreint d'identifiants de cellule à chaque couche dudit groupement hiérarchique ; et
l'allocation de l'un desdits identifiants de cellule à chacune de ladite pluralité de petites cellules en dépendance dudit type de cellule déterminé et dudit groupement hiérarchique déterminé, ladite allocation étant réalisée selon des critères d'allocation de sorte qu'un identifiant de cellule puisse être réutilisé au sein d'une couche inférieure dudit groupement hiérarchique lorsque les cellules auxquelles cet identifiant de cellule réutilisé est alloué sont au sein d'une région de couverture de cellules différentes dans une couche supérieure dudit groupement hiérarchique et des identifiants de cellule non identiques ont été alloués à ces cellules différentes, et dans lequel l'allocation comprend la détermination de si ledit nombre restreint d'identifiants de cellule est insuffisant pour satisfaire auxdits critères d'allocation ; et, si tel est le cas,
l'identification d'une cellule dans une couche inférieure dudit groupement hiérarchique devant être promue vers une couche supérieure pour satisfaire auxdits critères d'allocation.

2. Procédé selon la revendication 1, dans lequel ledit groupement hiérarchique est réalisé sur la base d'une indication de taille d'une région de couverture radio prise en charge par chaque type de cellule.

3. Procédé selon la revendication 1 ou la revendication 2, dans lequel ladite allocation desdits identifiants de cellule est réalisée en séquence, en débutant avec des cellules déterminées comme étant au niveau de la couche la plus élevée dudit groupement hiérarchique déterminé.

4. Procédé selon une quelconque revendication précédente, comprenant :
le fait d'ordonner à ladite cellule identifiée dans ladite couche inférieure dudit groupement hiérarchique d'être promue vers une couche supérieure pour effectuer des émissions à une puissance d'émission accrue.

5. Procédé selon une quelconque revendication précédente, comprenant :
l'adaptation de ladite allocation d'identifiants de cellule sur la base d'un signalement provenant d'au moins deux petites cellules parmi ladite pluralité de petites cellules indicatif d'une réception d'une demande de service identique provenant d'un équipement utilisateur au niveau desdites au moins deux petites cellules parmi ladite pluralité de petites cellules.

6. Procédé selon une quelconque revendication précédente, dans lequel le déploiement de réseau hétérogène est configuré pour fonctionner selon des techniques de cellule fantôme.

7. Procédé selon une quelconque revendication précédente, dans lequel ledit nombre restreint d'identifiants de cellule comprennent : des signaux de référence d'informations d'état de canal, CSI-RS.

8. Procédé selon l'une quelconque des revendications 1 à 7, comprenant en outre :
le fait d'ordonner à un équipement utilisateur de réaliser une mesure d'un signal reçu indicatif desdits identifiants de cellule alloués à une couche dudit groupement hiérarchique.

9. Procédé selon une quelconque revendication précédente, comprenant en outre :
la résolution d'une confusion de cellule lors de la réception d'une demande de service provenant d'un équipement utilisateur, par :
la réception d'une indication d'intensité de signal d'une demande de service reçue en provenance d'un équipement utilisateur par au moins deux petites cellules parmi ladite pluralité de petites cellules ; et
la comparaison desdites indications d'intensité de signal et le fait d'ordonner, à la cellule au niveau de laquelle ladite demande de service a été reçue avec la plus grande intensité de signal, de fournir un service audit équipement utilisateur.

10. Nœud de commande de réseau dans un déploiement de réseau hétérogène ;
le nœud de commande de réseau étant configuré pour allouer un nombre restreint d'identifiants de cellule à une pluralité de petites cellules déployées au sein d'une zone de couverture radio d'une macrocellule fonctionnant dans ledit déploiement de réseau hétérogène, ladite pluralité de petites cellules étant agencées pour comprendre au moins une région de couverture radio à chevauchement ;
ledit nœud de commande de réseau comprenant :
une logique de détermination configurée pour déterminer un type de cellule pour chacune de ladite pluralité de petites cellules ;
une logique d'établissement de hiérarchie apte à fonctionner pour établir, sur la base dudit type de cellule déterminé, un groupement hiérarchique de ladite pluralité de petites cellules ; et
une logique d'allocation apte à fonctionner pour fournir un sous-ensemble différent dudit nombre restreint d'identifiants de cellule à chaque couche dudit groupement hiérarchique ; et allouer l'un desdits identifiants de cellule à chacune de ladite pluralité de petites cellules en dépendance dudit type de cellule déterminé et dudit groupement hiérarchique, ladite allocation étant réalisée de sorte qu'un identifiant de cellule puisse être réutilisé au sein d'une couche inférieure dudit groupement hiérarchique lorsque les cellules auxquelles cet identifiant de cellule réutilisé est alloué sont au sein d'une région de couverture de cellules différentes dans une couche supérieure dudit groupement hiérarchique et des identifiants de non identiques ont été alloués à ces cellules différentes ;
dans lequel ladite logique d'allocation est configurée pour déterminer si ledit nombre restreint d'identifiants de cellule est insuffisant pour satisfaire auxdits critères d'allocation ; et, si tel est le cas,
identifier une cellule dans une couche inférieure dudit groupement hiérarchique devant être promue vers une couche supérieure pour satisfaire auxdits critères d'allocation.

11. Nœud de commande de réseau selon la revendication 10, configuré en outre pour manipuler une mobilité d'équipement utilisateur, ledit nœud de commande de réseau comprenant :
une logique de gestion de mobilité apte à fonctionner pour ordonner à un équipement utilisateur de réaliser une mesure d'un signal reçu indicatif desdits identifiants de cellule alloués à une couche dudit groupement hiérarchique.

12. Nœud de commande de réseau selon la revendication 10 ou la revendication 11, apte à fonctionner en outre pour résoudre une confusion de cellule lors de la réception d'une demande de service provenant d'un équipement utilisateur ledit nœud de commande de réseau comprenant :
une logique de comparaison configurée pour recevoir une indication d'intensité de signal d'une demande de service reçue en provenance d'un équipement utilisateur par au moins deux petites cellules parmi ladite pluralité de petites cellules et comparer lesdites indications d'intensité de signal ; et
une logique d'ordre apte à fonctionner pour ordonner, à la cellule au niveau de laquelle ladite demande de service a été reçue avec la plus grande intensité de signal, de fournir un service audit équipement utilisateur.

13. Produit programme d'ordinateur apte à fonctionner, lorsqu'il est exécuté sur un ordinateur, pour réaliser le procédé selon l'une quelconque des revendications 1 à 9.
